# EUROPÄISCHE PATENTSCHRIFT

(11) **EP 2 045 480 B1**
(45) Veröffentlichungstag und Bekanntmachung des Hinweises auf die Patenterteilung: **16.05.2012**
(21) Anmeldenummer: 08012883.8
(22) Anmeldetag: 17.07.2008
(51) Int. Cl.: F16D 7/08, F16D 43/206

(54) **Drehmomentbegrenzungskupplung**
Torque limiting coupling
Accouplement à limitation du couple

(30) Priorität: 04.10.2007 DE 102007047635
(43) Veröffentlichungstag der Anmeldung: 08.04.2009
(73) Patentinhaber: GKN Walterscheid GmbH, 53797 Lohmar (DE)
(72) Erfinder: Kämpf, Klaus, 53797 Lohmar (DE)
(74) Vertreter: Müller, Thomas Michael

(56) Entgegenhaltungen:
- EP-A- 1 219 391
- DE-B- 1 030 632
- DE-C- 745 147
- US-A- 2 775 327
- US-A- 4 075 873
- US-A- 4 226 316
- US-A- 4 294 340

## Beschreibung

Die Erfindung betrifft eine Drehmomentbegrenzungskupplung mit einer Längsachse, um die die Drehmomentbegrenzungskupplung drehbar angeordnet ist, mit einer Kupplungsnabe, die umfangsverteilte Durchbrüche aufweist, in welchen Mitnehmer parallel zur Längsachse verstellbar gehalten sind, mit einer Kupplungshülse, die zu den Durchbrüchen korrespondierende erste Ausnehmungen aufweist, mit einer Schaltscheibe, die zwischen einer Einschaltstellung, in der die Mitnehmer zur Drehmomentübertragung in die ersten Ausnehmungen eingreifen, und einer Freilaufstellung relativ zur Kupplungsnarbe drehbar angeordnet ist, und die bei einem Überschreiten eines vorgegebenen Nennmoments durch eine Abrollbewegung der Mitnehmer aus der Einschaltstellung zur Freilaufstellung überführt ist, wobei die Schaltscheibe zu den Durchbrüchen korrespondierende zweite Ausnehmungen aufweist, in welche die Mitnehmer in der Freilaufstellung eingreifen, und mit ersten Federmitteln, die die Schaltscheibe in Umfangsrichtung zur Schaltstellung beaufschlagen, sowie mit zweiten Federmitteln, die die Schaltscheibe axial aufschlagen und somit die Mitnehmer mittelbar in Richtung zur Kupplungsnabe beaufschlagen.

Drehmomentbegrenzungskupplungen sind aus dem Stand der Technik hinlänglich bekannt. Mit diesen können insbesondere kraft- und/oder drehmomentübertragende Bauteile eines Antriebsstrangs sehr wirkungsvoll vor kritischen Belastungen geschützt werden, indem die Drehmomentbegrenzungskupplungen bei einer Überlast eine Kräfte- beziehungsweise Drehmomentübertragung zwischen einer Antriebsseite und einer Abtriebsseite des Antriebsstrangs reduzieren oder zur Gänze unterbrechen können. Es versteht sich, dass derartige Drehmomentbegrenzungskupplungen vielfältiger Gestalt sein können.

Beispielsweise ist aus der Patentschrift DE 102 01 988 C2 und der US-A-4 294 340 eine gattungsgemäße Drehmomentbegrenzungskupplung bekannt, mittels der ermöglicht wird, bei Auftreten einer Überlast in einem Antriebsstrang mit sich drehenden Bauteilen eine Kraft- und/oder Drehmomentübertragung zu unterbrechen und nach Beseitigung der Überlast anschließend ein automatisches Einschalten der Drehmomentbegrenzungskupplung bei einer geringen Einschaltdrehzahl wieder zu ermöglichen. Üblicherweise beträgt die Einschaltdrehzahl etwa 100 U/min. Ist ein automatisches Einschalten der Drehmomentbegrenzungskupplung nicht erwünscht, ist es selbst bei sehr geringen Drehzahlen möglich, eine Not-Abschaltung der Drehmomentbegrenzungskupplung beizubehalten und ein automatisches Wiedereinschalten der Drehmomentbegrenzungskupplung durch Betätigen einer entsprechenden Sperrklinke zu unterbinden.

Die in der Patentschrift DE 102 01 988 C2 beschriebene Drehmomentbegrenzungskupplung weist eine Not-Abschatteigenschaft auf, so dass insbesondere Bauteile eines Antriebsstrangs bei einer Überlast gut geschützt sind, und bietet darüber hinaus auch eine Möglichkeit, ein automatisches Wiedereinschalten der Drehmomentbegrenzungskupplung bei Reduzierung der Drehzahl zu unterbinden.

Dass eine ausgelöste Drehmomentbegrenzungskupplung erst wieder bei einer sehr massiven Reduzierung der Drehzahl, auf z. B. etwa 100 U/min, hinsichtlich der kraftbeziehungsweise drehmomentübertragenden Bauteile des Antriebsstrangs oder oftmals sogar erst bei einem Stillstand des Antriebsstrangs wieder eingeschaltet werden kann, ist in einigen Fällen unerwünscht. Insbesondere bei kurzzeitigen Überlastungen, deren Ursachen sich meist schnell von selbst beseitigen können, wird ein Arbeitsprozess unnötig lang unterbrochen, wenn die Drehzahl im Antriebsstrang reduziert und anschließend eine Arbeitsmaschine erst wieder angefahren werden muss.

Die DE 745 147 zeigt eine Ratschenkupplung in Kombination mit einem begrenzten Freilauf. Die Ratschenkupplung ermöglicht bei Drehmomentübertragung eine spielfreie Drehmitnahme zwischen jeweils zwei Kupplungselementen. Zusätzlich ist ein begrenzter Freilauf vorgesehen, der eine begrenzte Drehung eines Kupplungsausgangsteils ermöglicht, um ein rückwärtig gerichtetes Drehmoment bei der Wiedereinschaltung der Drehmomentbegrenzungskupplung, bei dem Kugeln in Ausnehmungen eingreifen, auszugleichen, ohne dass ein anzutreibendes Element mit Drehmoment beaufschlagt wird.

Es ist daher Aufgabe vorliegender Erfindung, gattungsgemäße Drehmomentbegrenzungskupplungen dahingehend weiter zu entwickeln, dass mit ihnen eine höhere Wiedereinschaltdrehzahl erzielt werden kann.

Die Aufgabe der Erfindung wird durch eine Drehmomentbegrenzungskupplung gemäß Anspruch 1 gelöst.

In der Praxis hat sich gezeigt, dass mittels eines derartigen Umfangspiels zwischen den Mitnehmern und den ersten Ausnehmungen realisiert werden kann, dass eine ausgelöste Drehmomentbegrenzungskupplung selbst bei höheren Einschaltdrehzahlen, in der Praxis oberhalb von 100 U/min, wieder eingeschaltet werden kann, indem mittels des gebildeten Umfangspiels zwischen den Mitnehmern und den ersten Ausnehmungen eine Eintauchzeit der Mitnehmer in die ersten Ausnehmungen während eines Wiedereingreifens der Mitnehmer in die ersten Ausnehmungen bei einem Überführen der Mitnehmer aus der Freilaufstellung in die Einschaltstellung verlängert werden kann.

Hierdurch wird vorteilhafter Weise bewirkt, dass die Mitnehmer selbst bei höheren Drehzahlen, z. B. oberhalb von 100 U/min, ausreichend tief in die ersten Ausnehmungen gelangen können und hierbei nicht wieder ungewollte aus den ersten Ausnehmungen heraus springen, so dass ein Kraft- beziehungsweise Drehmomentschluss zwischen einer Antriebsseite und einer Abtriebsseite eines Antriebsstranges wieder hergestellt werden kann.

Die hier beschriebenen Drehzahlen beziehen sich auf rotierende Bauteile in einem Antriebsstrang und insbesondere auf die Drehmomentbegrenzungskupplung, welche mit dem Antriebsstrang mit dieser Drehzahl rotieren kann.

Der Begriff "Abschnitt" beschreibt Bereiche der Mitnehmer, die bei ordnungsgemäß eingeschalteter Drehmomentbegrenzungskupplung in den ersten Ausnehmungen, angeordnet sind, also in diese eintauchen.

Weiter kann mittels der vorliegenden Drehmomentbegrenzungskupplung vorteilhafter Weise selbst bei größeren anzutreibenden Massen nach einem Abschalten der Kupplung aufgrund der erhöhten Wiedereinschaltdrehzahl auch ein schnellerer Drehzahlanstieg erfolgen, ohne Gefahr zu laufen, dass die Mitnehmer auf Grund der hohen Massenträgheit zu früh wieder aus den ersten Ausnehmungen heraus gedrückt werden. Somit kann eine Anfahrzeit beispielsweise einer Arbeitsmaschine wesentlich verkürzt werden.

Es versteht sich, dass unterschiedlich ausgebildete Mitnehmer geeignet sein können, einen Kräfte- und/oder Drehmomentschluss in Wechselwirkung mit den ersten Ausnehmungen zu ermöglichen. So können die Mitnehmer etwa als Kugeln ausgebildet sein, wie beispielsweise in der eingangs erwähnten Patentschrift beschrieben.

Eine bevorzugte Ausführungsvariante sieht jedoch vor, dass die Mitnehmer in Form von Rollen dargestellt sind, die um radial zur Längsachse anordnete Drehachsen drehbar sind. Rollen haben im Vergleich zu Kugeln den Vorteil, dass sie höhere Drehmomente übertragen können. Es versteht sich, dass die Rollen hierbei geometrisch verschieden ausgebildet sein können, beispielsweise können die Rollen tonnenförmig oder kegelig ausgebildet sein.

Sind die Rollen zylindrisch ausgebildet, lassen sich insbesondere die korrespondierenden ersten Ausnehmungen baulich einfach gestalten, wodurch auch Bauteile, welche die ersten Ausnehmungen aufweisen, einfach herzustellen sind.

Ein Umfangsspiel zwischen den Mitnehmer und den ersten Ausnehmungen lässt sich insbesondere im Hinblick auf zylindrisch gestaltete Rollen sehr einfach realisieren, wenn die ersten Ausnehmungen eine Oberflächen kontur mit einem konkaven Krümmungsverlauf aufweisen, welcher zumindest teilweise von einem konvexen Krümmungsverlauf einer Mitnehmeroberflächenkontur, insbesondere einer Rollenoberflächenkontur, verschieden ist.

Im Hinblick auf Mitnehmer, welche als Kugeln ausgebildet sind, ist es vorteilhaft, wenn die Oberflächenkonturen der Ausnehmungen in ihren Umfangserstreckungen einen anderen Verlauf aufweisen als in ihren radialen Erstreckungen.

Mittels der vorstehend beschriebenen ersten Ausnehmungen, insbesondere im Zusammenspiel mit den Mitnehmern, sind sowohl einerseits vorteilhafte Mittel zum Überführen der Mitnehmer in eine Einschaltstellung mit einer Einschaltdrehzahl von mehr als 200 U/min, vorzugsweise mit einer Einschaltdrehzahl von 300 U/min realisiert, als auch andererseits vorteilhafte Mittel zum Verlängern der Eintauchzeit der Mitnehmer in die ersten Ausnehmungen während eines Wiedereingreifens der Mitnehmer in die ersten Ausnehmungen bei einem Überführen der Mitnehmer aus der Freilaufstellung in die Einschaltstellung.

Vorteilhafter Weise können sogar bereits verwendete Drehmomentkupplungen in ihrem Einschaltverhalten verändert werden, wenn man beispielsweise eine die ersten Ausnehmungen aufweisende Kupplungshülse gegen eine Kupplungshülse austauscht, die erste Ausnehmungen umfasst, die in der Einschaltstellung ein Umfangsspiel hinsichtlich der verwendeten Mitnehmer ermöglicht.

Weitere Vorteile, Ziele und Eigenschaften vorliegender Erfindung werden anhand nachfolgender Beschreibung anliegender Zeichnung exemplarisch erläutert, in welcher schematisch eine Drehmomentbegrenzungskupplung, insbesondere mit einer Kupplungshülse, welche in Umfangsrichtung länger ausgebildete erste Ausnehmungen umfasst, dargestellt ist.

Es zeigt:
- Figur 1: schematisch einen Längsschnitt einer Drehmomentbegrenzungskupplung,
- Figur 2: schematisch einen weiteren Längsschnitt entlang einer Schnittlinie E-E der Drehmomentbegrenzungskupplung,
- Figur 3: schematisch einen Querschnitt entlang einer Schnittlinie F-F der Dreh- momentbegrenzungskupplung,
- Figur 4: schematisch eine Aufsicht auf eine Kupplungshülse mit in Umfangsrich- tung länger ausgebildeten ersten Ausnehmungen,
- Figur 5: schematisch einen Längsschnitt durch die Kupplungshülse aus der Figur 4, und
- Figur 6: schematisch eine perspektivische Ansicht der Kupplungshülse aus den Figuren 4 und 5.

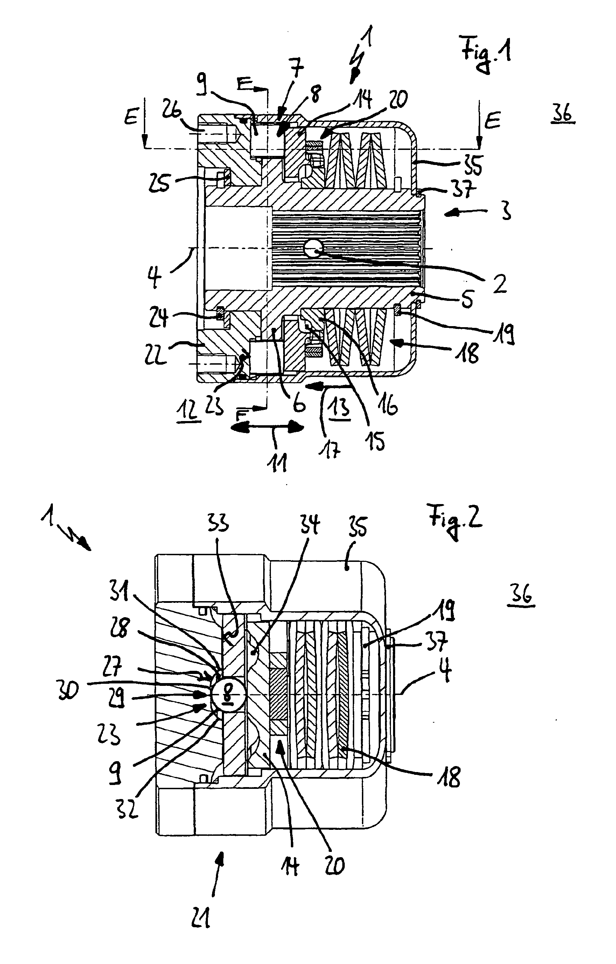

Die in der Figur 1 gezeigte Drehmomentbegrenzungskupplung 1 wird mit einem hier nicht dargestellten Wellenzapfen mittels einer Splineverbindung 3 mit dem Wellenzapfen formschlüssig und verdrehfest verbunden. Die Drehmomentbegrenzungskupplung 1 und der Wellenzapfen können somit um eine gemeinsame Rotationsachse 4 rotieren.

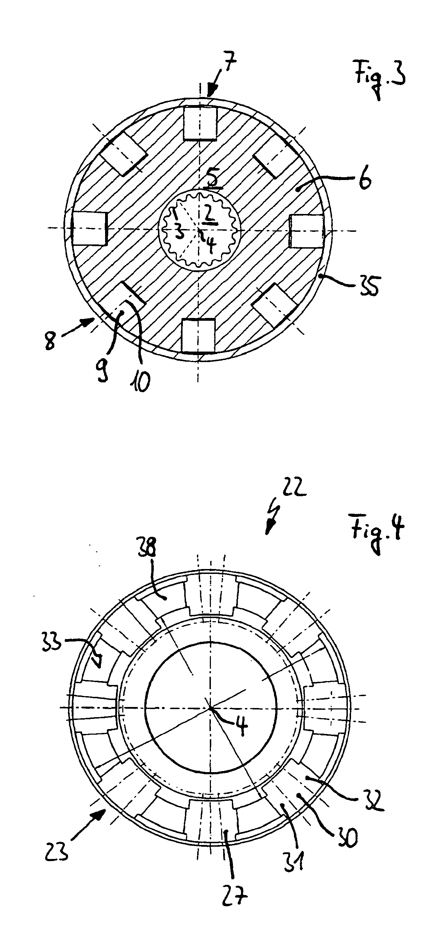

Die Drehmomentbegrenzungskupplung 1 weist eine Kupplungsnabe 5 auf, mittels welcher sie auf dem Wellenzapfen aufgeschoben wird. Die Kupplungsnabe 5 bildet radial außen einen konzentrisch umlaufenden Kupplungsflansch 6 aus, in welchem konzentrisch um die gemeinsame Rotationsachse 4 insgesamt acht Durchbrüche 7 (hier nur exemplarisch beziffert, siehe insbesondere auch Figur 3) vorgesehen sind.

Die Durchbrüche 7 dienen zur Aufnahme von Mitnehmern 8, die in diesem Ausführungsbeispiel als zylindrische Rollen 9 ausgebildet sind. Die Mitnehmer 8 sind jeweils um eine Mitnehmerdrehachse 10 (siehe insbesondere Figur 3 exemplarisch beziffert) drehbar innerhalb der Durchbrüche 7 gelagert. Hierbei können die Mitnehmer 8 gemäß der Doppelpfeilrichtung 11 je nach Schaltzustand der Drehmomentbegrenzungskupplung 1 gemäß der Darstellung von Figur 1 mal mehr linksseitig 12 (Einschaltstellung) oder mal mehr rechtsseitig 13 (Freilaufstellung) in den Durchbrüchen 7 verlagert werden.

Primär, also im Betriebszustand, in welchem Kräfte und/oder Drehmomente mit der Drehmomentbegrenzungskupplung übertragen werden können, befinden sich die Mitnehmer 8 in ihrer Einschaltstellung und sind demnach zur linken Seite 12 hin mit Kraft gerückt, da die Mitnehmer 8 mittels einer federunterstützten Schaltscheibe 14 zur linken Seite 12 hin mit Kraft beaufschlagt werden.

Die Schaltscheibe 14 ist hierzu über ein Drucklager 15 und einen Druckring 16 permanent mittels Federkräfte 17 eines Tellerfederpaketes 18 in Richtung des konzentrisch umlaufenden Kupplungsflansches 6 gedrückt. Der Druckring 16 sitzt auf der Kupplungsnabe 5 verdrehgesichert und axial verschiebbar. Hierzu dient eine Verdrehsicherung, die in einer Radialbohrung 2 der Kupplungsnabe 5 sitzt. Die Schaltscheibe 14 ist über das Drucklager 15 gegenüber dem Druckring 16 drehbar und lässt sich zusammen mit dem Druckring 16 axial auf der Kupplungsnabe 5 gegen die Federkraft des Tellerfederpakets 18 verstellen. Das Tellerfederpaket 18 ist hierbei einerseits axial gegen den Druckring 16 und andererseits gegen einen Stützring 19 abgestützt. Ein Spannklammerpaket 20 ist einerseits in Umfangsrichtung gegen den Druckring 16 und andererseits gegen die Schaltscheibe 14 abgestützt und beaufschlagt die Schaltscheibe 14 in eine Drehposition relativ zum Druckring 16, die der Einschaltstellung entspricht.

In der Einschaltstellung, also im Betriebszustand der Drehmomentbegrenzungskupplung gemäß der Figuren 1 und 2, befinden sich die Mitnehmer 8 hinsichtlich einer Kupplungshülse 22 in einer Einkuppelposition, da die Mitnehmer 8 an der Kupplungshülse 22 in ersten Ausnehmungen 23 der Drehmomentbegrenzungskupplung 1 angeordnet sind. Die ersten Ausnehmungen 23 sind an der Kupplungshülse 22 konzentrisch um die gemeinsame Rotationsachse 4 angeordnet.

Die Kupplungshülse 22 ist mittels eines weiteren Stützrings 24 und einer Zwischenscheibe 25 linksseitig 12 an der Kupplungsnabe 5 befestigt. Darüber hinaus verfügt die Kupplungshülse 22 über Gewindebohrungen 26 (hier nur exemplarisch beziffert), mittels welchen sie mit einem hier nicht näher gezeigten Bauteil antriebsseitig oder abtriebsseitig verbunden werden kann.

In der Darstellung nach der Figur 2 ist eine der ersten Ausnehmungen 23 im Querschnitt gut zu erkennen. Die ersten Ausnehmungen 23 sind in diesem Ausführungsbeispiel mit einer pfannenförmigen Oberflächenkontur 27 ausgebildet, so dass sich zwischen den Mitnehmern 8, die vorliegend als zylindrische Rollen 9 ausgebildet sind, ein Umfangsspiel 28 vorliegt. Dieses Umfangsspiel 28 ergibt sich in Umfangsrichtung der Kupplungshülse 22 gesehen beidseits der zylindrischen Rollen 9, da die pfannenförmige Oberflächenkontur 27 im Bereich ihres Scheitelpunktes 29 einen Bodenbereich 30 der ersten Ausnehmungen 23 bilden.

Im Lastfall liegen die Mitnehmer 8 je nach Drehrichtung an einem der gekrümmten Seitenbereiche 31 oder 32 an, die sich zwischen dem ebenen Bodenbereich 30 und einer planen Lauffläche 33 der Kupplungshülse 22 befinden und die pfannenförmige Oberflächenkontur 27 komplettieren.

In einem Überlastfall wird die Schaltscheibe 14 gegenüber der Kupplungshülse 22 um die gemeinsame Rotationsachse 4 derart verdrehen, dass zweite Ausnehmungen 34 der Drehmomentbegrenzungskupplung 1, welche sich an der Schaltscheibe 14 befinden, in Überdeckung mit den Durchbrüchen 7 im konzentrisch umlaufenden Kupplungsflansch 6 gebracht werden. Hierbei bleibt die Schaltscheibe 14 in Umfangsrichtung durch das Spannklammerpaket 20 in Umfangsrichtung in Richtung zur Einnahme der Einschaltstellung mit Kraft beaufschlagt und wird durch die Federkräfte automatisch in ihre Einschaltstellung zurück verlagert, sobald der Überlastfall beendet und die Drehmomentbegrenzungskupplung 1 mit einer geeigneten Drehzahl dreht.

Bei einer Überlast verdrehen sich also die Kupplungshülse 22 und die Kupplungsnabe 5 derart zueinander, dass die Mitnehmer 8 die Schaltscheibe 14 gegen die Federkräfte 17 drückt, das Tellerfedernpaket 18 hierdurch komprimiert wird und die Mitnehmer 8 sich in die zweite Ausnehmungen 34 der Schaltscheibe 14 verlagern können und hierdurch der Kraftschluss zwischen der Kupplungshülse 22 und der Kupplungsnabe 5 unterbrochen ist. Sind die Mitnehmer 8 in die zweiten Ausnehmungen 34 hinein verlagert, befindet sich die Drehmomentbegrenzungskupplung 1 in einer Freilaufstellung, so dass ein Kraft- und Drehmomentschluss zwischen einer Antriebsseite und einer Abtriebsseite unterbrochen ist und hierdurch Beschädigungen in einem Antriebsstrang vermieden werden können.

Ist die Überlast beseitigt, wird, wie vorstehend bereits beschrieben, insbesondere durch eine Drehzahlreduzierung erreicht, dass die Kupplung von der Freilaufstellung wieder in die Einschaltstellung 21 überführt werden kann, indem die Mitnehmer 8 zurück in die ersten Ausnehmungen 23 verlagert werden können. Da die ersten Ausnehmungen 23 in diesem Ausführungsbeispiel eine pfannenförmige Oberflächenkontur 27 aufweisen, steht ein längere Zeitraum zur Verfügung, in welchem die Mitnehmer 8 in die ersten Ausnehmungen 23 wieder eintauchen können, bevor sie gegen einen der gekrümmten Seitenbereiche 31 beziehungsweise 32 stoßen, so dass durch diesen zusätzlich gewonnenen Zeitraum erzielt wird, dass die Mitnehmer 8 wesentlich tiefer (idealer Weise vollständig) in die ersten Ausnehmungen 23 eintauchen.

Insbesondere durch die in Umfangsrichtung gesehen breiter ausgestalteten ersten Ausnehmungen 23 wird erzielt, dass die Mitnehmer 8 bei einer wesentlich höheren Einschaltdrehzahl der Drehmomentbegrenzungskupplung 1 wieder in die ersten Ausnehmungen 23 betriebssicher gelangen können, so dass die Drehmomentbegrenzungskupplung 1 wesentlich schneller wieder betriebsbereit ist. Insofern stellen die hier gezeigten ersten Ausnehmungen 23 mit ihren pfannenförmigen Oberflächenkonturen 27 besonders vorteilhafte Mittel zum Verlängern einer Eintauchzeit der Mitnehmer 8 in die ersten Ausnehmungen 23 während eines Wiedereingreifens der Mitnehmer 8 in die ersten Ausnehmungen 23 bei einem Überführen der Mitnehmer 8 aus der Freilaufstellung in die Einschaltstellung.

An dieser Stelle sei noch erwähnt, dass die Drehmomentbegrenzungskupplung 1 ein Gehäuse 35 umfasst, welches die zuvor beschriebenen Bauteile beziehungsweise Bauteilgruppen der Drehmomentbegrenzungskupplung 1 vor Einflüssen aus der Umgebung 36 schützt und welche gegen die Kupplungshülse 22 angeschlagen mittels eines Sicherungsrings 37 an der Kupplungsnabe 5 gehalten wird.

Bei dem in der Figur 3 gezeigten Querschnitt durch den konzentrisch umlaufenden Kupplungsflansch 6 der Kupplungsnabe 5 erkennt man gut die konzentrisch um die gemeinsame Rotationsachse 4 angeordneten Durchbrüche 7. In den Durchbrüchen 7 befinden sich die Mitnehmer 8, welche jeweils um ihre Mitnehmerdrehachse 10 rotieren können, so dass die Mitnehmer 8 problemlos auf der planen Lauffläche 33 der Kupplungshülse 22 abrollen können. Radial geschlossen werden die Durchbrüche 7 an dem konzentrisch umlaufenden Kupplungsflansch 6 mittels des Gehäuses 35, welches über den Kupplungsflansch 6 geschoben an der Kupplungsnabe 5 befestigt ist.

In Figur 4 ist die Kupplungshülse 22 aus Sicht der Schaltscheibe 14 gezeigt. Ähnlich wie hinsichtlich der Durchbrüche 7 der Kupplungsnabe 5 sind insgesamt acht erste Ausnehmungen 23 konzentrisch um die gemeinsame Rotationsachse 4 an der Kupplungshülse 22 vorgesehen. Zwischen den ersten Ausnehmungen 23 sind Laufflächensegmente 38 angeordnet, welche die planen Laufflächen 33 an der Kupplungshülse 22 realisieren.

Die pfannenförmige Oberflächen kontur 27 schließt mit ihren gekrümmten Seitenbereichen 31 beziehungsweise 32 an diese Laufflächensegmente 38 an. Zwischen diesen beiden gekrümmten Seitenbereichen 31 und 32 befindet sich an jeder pfannenförmigen Oberflächenkontur 27 ein ebener Bodenbereich 30.

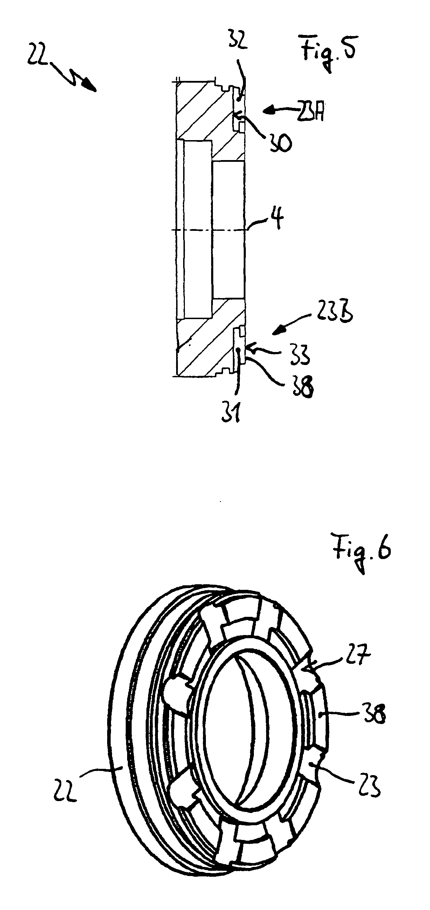

In dem in der Figur 5 gezeigten Längsschnitt der Kupplungshülse 22 im Bereich zweier sich gegenüber liegender Ausnehmungen 23A und 23B blickt man im oberen Bereich der Kupplungshülse 22 auf einen zweiten gekrümmten Seitenbereich 32 der oberen ersten Ausnehmung 23A und erkennt zudem gut den ebenen Bodenbereich 30 und das an den zweiten gekrümmten Seitenbereich 32 anschließende Laufflächensegment 38 mit seiner planen Lauffläche 33, welche der Übersichtlichkeit halber lediglich an der unteren ersten Ausnehmung 23B im unteren Bereich der Kupplungshülse 22 beziffert ist. An der unteren ersten Ausnehmung 23B im unteren Bereich der Kupplungshülse 22 ist ein erster gekrümmter Seitenbereich 31 einer pfannenförmigen Oberflächen kontur 27 sowie die plane Lauffläche 33 eines Laufflächensegments 38 beziffert.

Hinsichtlich der Darstellung nach der Figur 6 ist die Kupplungshülse 22 in einer perspektivischen Ansicht aus Richtung der Schaltscheibe 14 gezeigt, in welcher sehr gut die Anordnung der ersten Ausnehmungen 23 mit den pfannenförmigen Oberflächenkonturen 27und der Laufflächensegmente 38 im Wechsel zu erkennen ist.

### Bezugszeichenliste

- 1: Drehmomentbegrenzungskupplung
- 2: Radialbohrung
- 3: Splineverbindung
- 4: Rotationsachse
- 5: Kupplungsnabe
- 6: Kupplungsflansch
- 7: Durchbruch
- 8: Mitnehmer
- 9: Rolle
- 10: Mitnehmerdrehachse
- 11: Doppelpfeilrichtung
- 12: linksseitig
- 13: rechtsseitig
- 14: Schaltscheibe
- 15: Drucklager
- 16: Druckring
- 17: Federkräfte
- 18: Tellerfederpaket
- 19: Stützring
- 20: Spannklemmenpaket
- 22: Kupplungshülse
- 23: erste Ausnehmung
- 23A: obere gegenüberliegende erste Ausnehmung
- 23B: untere gegenüberliegende erste Ausnehmung
- 24: weiterer Stützring
- 25: Zwischenscheibe
- 26: Gewindebohrung
- 27: pfannenförmige Oberflächenkontur
- 28: Umfangsspiel
- 29: Scheitelpunkt
- 30: ebener Bodenbereich
- 31: erster gekrümmter Seitenbereich
- 32: zweiter gekrümmter Seitenbereich
- 33: plane Lauffläche
- 34: zweite Ausnehmung
- 35: Gehäuse
- 36: Umgebung
- 37: Sicherungsring
- 38: Laufflächensegment

## Patentansprüche

1. Drehmomentbegrenzungskupplung (1) umfassend
eine Längsachse (4), um die die Drehmomentbegrenzungskupplung (1) drehbar angeordnet ist,
eine Kupplungsnabe (5), die umfangsverteilte Durchbrüche (7) aufweist, in welchen Mitnehmer (8) parallel zur Längsachse (4) verstellbar gehalten sind, eine Kupplungshülse (22), die zu den Durchbrüchen (7) korrespondierende erste Ausnehmungen aufweist,
eine Schaltscheibe (14), die zwischen einer Einschaltstellung (21), in der die Mitnehmer (8) zur Drehmomentübertragung in die ersten Ausnehmungen (23) eingreifen, und einer Freilaufstellung relativ zur Kupplungsnabe (5) drehbar angeordnet ist und bei Überschreiten eines vorgegebenen Nennmoments durch eine Abrollbewegung der Mitnehmer (8) aus der Einschaltstellung (21) zur Freilaufstellung überführbar ist, wobei die Schaltscheibe (14) zu den Durchbrüchen (7) korrespondierende zweite Ausnehmungen (34) aufweist, in welche die Mitnehmer (8) in der Freilaufstellung eingreifen,
erste Federmittel, die die Schaltscheibe (14) in Umfangsrichtung zur Einschaltstellung (21) beaufschlagen, sowie
zweite Federmittel (18), die die Schaltscheibe (14) axial beaufschlagen und somit die Mitnehmer (8) mittelbar in Richtung zur Kupplungsnabe (5) beaufschlagen,
**dadurch gekennzeichnet,**
**dass** in der Einschaltstellung (21) ein Umfangsspiel (28) zwischen den Mitnehmern (8) und den ersten Ausnehmungen (23) dadurch gebildet ist,
**dass** die ersten Ausnehmungen (23) in Umfangsrichtung länger ausgebildet sind als in die ersten Ausnehmungen (23) eingreifende Abschnitte der Mitnehmer (8).

2. Drehmomentbegrenzungskupplung (1) nach Anspruch 1,
**dadurch gekennzeichnet,**
**dass** die Mitnehmer (8) in Form von Rollen dargestellt sind, die um radial zur Längsachse (4) angeordnete Drehachsen (10) drehbar sind.

3. Drehmomentbegrenzungskupplung nach Anspruch 2,
**dadurch gekennzeichnet,**
**dass** die Rollen (9) zylindrisch sind.

4. Drehmomentbegrenzungskupplung nach einem der Ansprüche 1 bis 3
**dadurch gekennzeichnet,**
**dass** die ersten Ausnehmungen (23) eine Oberflächenkontur (27) mit einem konkaven Krümmungsverlauf aufweisen, welcher zumindest teilweise von einem konvexen Krümmungsverlauf einer Mitnehmeroberflächenkontur verschieden ist.

5. Drehmomentbegrenzungskupplung (1) nach einem der Ansprüche 1 bis 4,
**dadurch gekennzeichnet,**
**dass** die ersten Ausnehmungen (23) einen in etwa planen Bodenbereich (30) aufweisen.

6. Drehmomentbegrenzungskupplung nach einem der Ansprüche 1 bis 5,
**dadurch gekennzeichnet, dass**
die Mitnehmer (8) und die ersten Ausnehmungen (23) derart gestaltet sind, dass die Mitnehmer (8) in eine Einschaltstellung (21) mit einer Einschaltdrehzahl von mehr als 200 U/min, vorzugsweise mit einer Einschaltdrehzahl von 300 U/min, überführt werden können.

## Claims

1. Torque limiting coupling (1) comprising
a longitudinal axis (4), around which the torque limiting coupling (1) is rotatably arranged,
a coupling hub (5), having circumferentially distributed apertures (7), in which drivers (8) are held displaceably parallel to the longitudinal axis (4),
a coupling sleeve (22), which has first recesses corresponding to the apertures (7),
a shift disc (14), which is rotatably arranged relative to the coupling hub (5) between a switched-on position (21), in which the drivers engage for the torque transmission in the first recesses (23), and an idling position and which shift disc (14), when exceeding a predetermined nominal torque, is transferable by a rolling-off movement of the drivers (8) from a switched-on position (21) to the idling position, wherein the shift disc (14) has second recesses (34) corresponding to the apertures (7) and in which the drivers (8) engage in the idling position,
first spring means, which urge the shift disc (14) in circumferential direction towards the switched-on position, as well as
second spring means (18), which axially act on the shift disc (14) and thus act on the drivers (8) indirectly in the direction towards the coupling hub (5),
**characterised in**
**that** in the switched-on position (21) a circumferential play (28) is provided between the drivers (8) and the first recesses (23) in that,
the first recesses (23) are formed longer in circumferential direction than the portions of the drivers (8) engaging in the first recesses (23).

2. Torque limiting coupling (1) according to claim 1,
**characterised in**
**that** the drivers (8) are provided in the form of rollers, which are rotatable around axes of rotation (10) arranged radially to the longitudinal axis (4).

3. Torque limiting coupling according to claim 2,
**characterised in**
**that** the rollers (9) are formed cylindrically.

4. Torque limiting coupling according to one of claims 1 to 3,
**characterised in**
**that** the first recesses (23) have a surface contour (27) with a concave curvature, which differs at least partially from a convex curvature of a driver surface contour.

5. Torque limiting coupling (1) according to one of claims 1 to 4,
**characterised in**
**that** the first recesses (23) have an approximately flat bottom portion (30).

6. Torque limiting coupling according to one of claims 1 to 5,
**characterised in**
**that** the drivers (8) and the first recesses (23) are formed such, that the drivers (8) can be transferred into a switched-on position (21) with a switching-on rotational speed of more than 200 rpm, preferably with a switching-on rotational speed of 300 rpm.

## Revendications

1. Accouplement à limitation de couple (1) comprenant
un axe longitudinal (4), autour duquel l'accouplement à limitation de couple (1) est disposé rotativement,
un bossage d'accouplement (5), qui présente des percées (7) réparties sur la circonférence, dans lesquelles des doigts d'entraînement (8) sont maintenus de manière orientable parallèlement à l'axe longitudinal (4),
un manchon d'accouplement (22), qui présente des premiers évidements correspondants aux percées (7),
un disque de commande (14), qui est disposé rotativement entre une position active (21), dans laquelle les doigts d'entraînement (8) viennent en prise dans les premiers évidements (23) à des fins de transmission de couple de rotation, et une position de repos relativement au bossage d'accouplement (5) et en cas de dépassement d'un couple nominal prescrit par un mouvement de roulement des doigts d'entraînement (8) peuvent être amenés de la position active (21) à la position de repos, dans lequel le disque de commande (14) présente des deuxièmes évidements (34) correspondants aux percées (7), dans lesquels les doigts d'entraînement (8) viennent en prise dans la position de repos,
des premiers moyens de ressort, qui sollicitent le disque de commande (14) dans la direction circonférentielle vers la position active (21), ainsi que
des deuxièmes moyens de ressort (18), qui sollicitent axialement le disque de commande (14) et sollicitent ainsi les doigts d'entraînement (8) directement dans la direction du bossage d'accouplement (5),
**caractérisé en ce que**
dans la position active (21), un jeu circonférentiel (28) entre les doigts d'entraînement (8) et les premiers évidements (23) est formé de telle sorte que
les premiers évidements (23) soient plus longs dans la direction circonférentielle que dans les portions des doigts d'entraînement (8) venant en prise dans les premiers évidements (23).

2. Accouplement à limitation de couple (1) selon la revendication 1,
**caractérisé en ce que**
les doigts d'entraînement (8) sont représentés sous forme de rouleaux, qui peuvent entrer en rotation autour d'axes de rotation (10) disposés radialement à l'axe longitudinal (4).

3. Accouplement à limitation de couple selon la revendication 2,
**caractérisé en ce que**
les rouleaux (9) sont cylindriques.

4. Accouplement à transmission de couple selon une des revendications 1 à 3,
**caractérisé en ce que**
les premiers évidements (23) présentent une surface de contour (27) avec un cours d'incurvation concave, qui diffère au moins partiellement d'un cours d'incurvation convexe d'un contour de surface de doigt d'entraînement.

5. Accouplement à transmission de couple (1) selon une des revendications 1 à 4,
**caractérisé en ce que**
les premiers évidements (23) présentent une zone de fond (30) approximativement plane.

6. Accouplement à transmission de couple selon une des revendications 1 à 5,
**caractérisé en ce que**
les doigts d'entraînement (8) et les premiers évidements (23) sont conçus de telle sorte que les doigts d'entraînement (8) puissent passer à une position active (21) avec un régime de rotation actif de plus de 200 U/min, de préférence avec un régime de rotation actif de 300 U/min.
